# EUROPÄISCHE PATENTSCHRIFT

(11) **EP 0 367 037 B1**
(45) Veröffentlichungstag und Bekanntmachung des Hinweises auf die Patenterteilung: **22.12.1993**
(21) Anmeldenummer: 89119460.7
(22) Anmeldetag: 20.10.1989
(51) Int. Cl.: B30B 9/22, B01D 29/25, B01D 29/60, B01D 29/64, B01D 29/94

(54) **Verfahren zur Entwässerung von in Wasser suspendierten Feststoffen sowie Pressschneckenseparator dafür**
Dehydration process of aqueous suspensions, and screw press therefor
Procédé de déshydratation d'une suspension aqueuse et pressoir à vis rotative

(30) Priorität: 03.11.1988 DE 3837331; 04.03.1989 DE 3907046; 01.09.1989 DE 3929089
(43) Veröffentlichungstag der Anmeldung: 09.05.1990
(73) Patentinhaber: FAN ENGINEERING GMBH, D-59302 Oelde (DE)
(72) Erfinder: Eichler, Dietrich, Dr.-Ing., D-8201 Grosskarolinenfeld (DE)
(74) Vertreter: Schmidt, Horst, Dr.

(56) Entgegenhaltungen:
- DE-A- 3 428 381
- DE-C- 334 903
- FR-A- 668 746
- FR-A- 852 879
- GB-A- 269 150
- US-A- 3 188 942
- DERWENT JAPANESE PATENTS REPORT, Band 11, Nr. 318 (M-632)[2765], 16. Oktober 1987, Sektion Mechanical, Derwent Publications Ltd, London, GB; & JP-A-62 101 397 (MATSUSHITA ELECTRIC CO.) 11-05-1987

## Beschreibung

Die Erfindung betrifft ein Verfahren und eine Vorrichtung zum Abtrennen von Abwasser und Feststoffen für Feststoffe enthaltende Abwässer, bei dem das Abwasser in einen Preßschneckenseparator eingeführt, der darin enthaltene Feststoff durch eine von einem Antriebsmotor angetriebene, bis in einen Siebkorb reichende Schnecke zu einem Pfropfen geformt und als Pfropfen entwässert aus der Mündung des Preßschneckenseparators ausgedrückt wird, während das von dem Feststoff befreite Wasser aus dem Gehäuse des Preßschneckenseparators austritt.

Bei einem bekannten Verfahren und einer bekannten Vorrichtung der eingangs erwähnten Art (DE-A-34 28 381) enden sowohl Preßschneckenwendel als auch Preßschneckenwelle in einem erheblichen Abstand vor der Mündung des Gehäuses. Die bekannte Vorrichtung dient zum Verdichten und Entwässern von Festmaterial, nicht zur Entwässerung von in Wasser suspendierten Feststoffen. Bei der bekannten Vorrichtung wird das Festmaterial nur über einen Teil des Schnekkengehäuses durch die Schnecke gefördert und anschließend in einer schneckenfreien Zone bewegt, in der das Festmaterial weiter entwässert werden soll. Schließlich soll das so entwässerte Festmaterial verengungsfrei aus der Austrittsöffnung des Gehäuses ausgepreßt werden.

Bei dieser bekannten Lösung erfolgt die Verspannung des Feststoffpfropfens an der zylindrischen Außenwand des Gehäuses mit der Folge, daß der Spannungsdruck des Feststoffpfropfens in der Achsmitte praktisch null ist. Für eine Entwässerung von in Wasser suspendierten Feststoffen ist diese bekannte Lösung nicht geeignet, da der Feststoffpfropfen bei einem solchen Einsatz von der Mittelachse her aufgeweicht und ausgespült wird.

Bei der Tierintensivhaltung hat sich der Einsatz von Flüssigentmistungen bewährt und wird in zunehmendem Maße angewendet. In einer Mitteilung aus dem Institut für Technologie der Bundesforschungsanstalt für Landwirtschaft, Braunschweig-Völkenrode, veröffentlicht in Grundl. Landtechnik Bd. 37 (1987) Nr. 3, Seite 98-107, wurden von R. Krause und R. Ahlers unter dem Titel "Verfahrenstechnik des Separierens von Flüssigmist" die Problemstellung der Flüssigentmistung und die Bedeutung der Fest-Flüssig-Trennung der Gülle dargestellt. Weiterhin wurden die Vor- und Nachteile einzelner Geräte aufgezeigt und miteinander verglichen.

Eine der einfachen Maschinen zur Trennung von Feststoffen aus Flüssigkeiten stellt die Schneckenpresse bzw. der Preßschneckenseparator dar. Dabei wird häufig zur allmählichen Verdichtung des abgetrennten Feststoffes von zum Austrag hin enger werdenden Schneckenwindungen ausgegangen. Der Druckaufbau mit Hlfe von Verengungen ist auch in der deutschen Patentschrift 26 36 372 und in der deutschen Offenlegungsschrift 29 11 899 dargestellt. Der praktische Betrieb dieser Anordnungen zeigt jedoch, daß sich alle konisch verjüngenden Bereiche nachteilig auf die Durchsatzleistung, den Einsatzbereich und die Flexibilität des Preßschneckenseparators auswirken. Sobald sich die zugeführte Menge der Suspension oder deren Konsistenz z.B durch Änderung des Gehaltes an faserigem Feststoff änderte, kommt es zu Feststoffverdichtungen in den konischen oder anderweitig enger werdenden Bereichen mit dem Ergebnis der Verstopfung des Preßseparators.

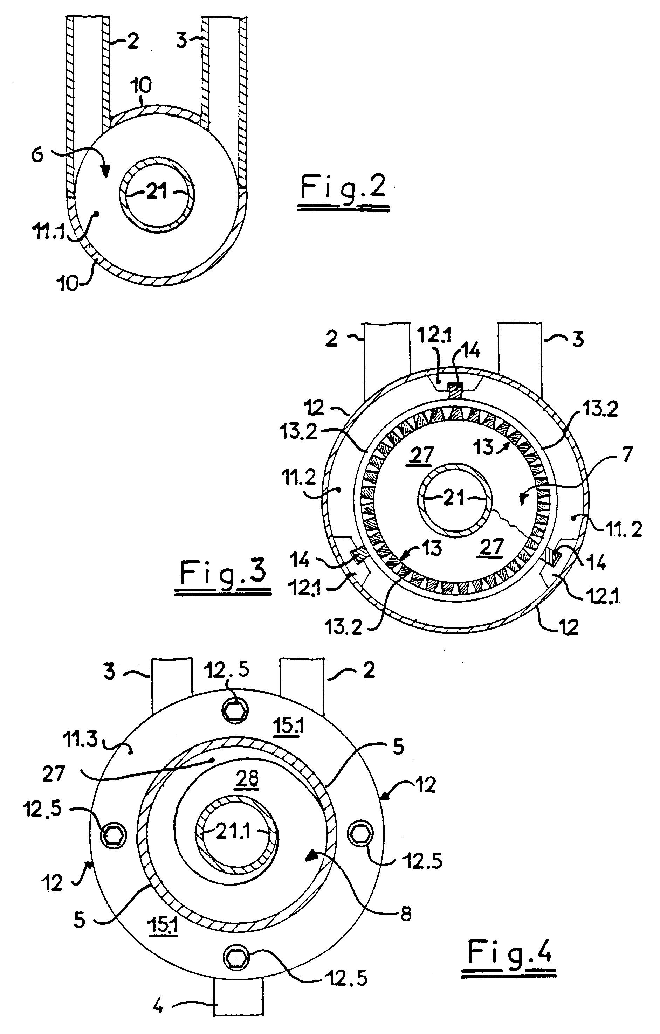

In der deutschen 0ffenlegungsschrift 27 00 542 und in der deutschen Patentschrift 29 02 432 wurde bei dem dort dargestellten Preßschnekkenseparator bereits auf konische Teile verzichtet, lediglich in der Figur 2 ist der Durchgang durch die Gehäusewand 14 zum Siebkorbdurchmesser 24B kleiner dargestellt, so daß dieses Wandstück einen Gegendruck aufbauen könnte. In diesem Separator mit dieser als wirkungslos anzusehenden Verengung wird durch die gleichbleibende, bis zum Auslauf hin geführte Schnecke die Suspension zwar entwässert, jedoch wird eine Preßwirkung zur Erreichung einer hohen Trockensubstanz, beispielsweise von über 20 % im Schweinegüllefeststoff, nicht erreicht.

Das Ziel der Erfindung besteht in der Vergrößerung des Einsatzbereiches und der Flexibilität der in den Patentanmeldungen dargestellten Preßschneckenseparatoren sowie der Erhöhung des Trockensubstanzgehaltes im Feststoff. Die Zielstellung bezieht sich dabei auf Veränderungen der Bildung und der Form des Feststoffpfropfens, um unabhängig von verschiedenen Güllearten und Konsistenzschwankungen eine störungsfreie Arbeitsweise der Maschine zu erreichen.

Die erfindungsgemäße Lösung der technischen Aufgabe hinsichtlich der Pfropfenbildung, dem Transport und dem Austritt des Feststoffes besteht darin, daß der Feststoffkuchen sich in allen Bereichen der Entwässerung im Siebkorb befindet und der Preßschneckenseparator so gebildet ist, daß sich kein Feststoff zwischen konischen oder sich verjüngenden Teilen anstauen kann.

Im einzelnen wird die Lösung der Aufgabe dadurch erreicht, daß der erforderliche Gegendruck durch die innere Verspannung des unter Druck stehenden elastischen Feststoffes durch die Reibung an den zur Förderrichtung hin parallelen, den Pfropfen begrenzenden Wänden aufgebaut wird. Die Pfropfenbildung beginnt bereits vor dem Siebkorb unter Anstieg des Druckes, der vom Auslauf der Schneckenwendel der Preßschnecke bis zum Ende des Siebkorbes weiter ansteigt, um danach zur Mündung hin abzufallen. Dieser Druckanstieg in dem von der Schnekkenwendel freien Teil des Siebkorbes ist wesentlich für die weitere Entwässerung des auf der Siebfläche zurückgehaltenen Feststoffes. Für die gewünschte Pfropfenbildung und die vorgesehene Entwässerung ist ein Druckniveau im Preßschneckenseparator günstig, das nur unwesentlich von Druckniveau der umgebenden Atmosphäre abweicht; um den dazu notwendigen Druckausgleich zu erreichen, wird ein Druckausgleich über eine Ausgleichsleitung hergestellt, die zum Vermeiden von Abwasser-Austritt beim Anfahren in den Abwasserbehälter zurückgeführt ist. Der Feststoffpfropfen selbst wird in einem zylindrischen Siebkorb aus achsial angeordneten Siebstäben mit Siebspalten von 0,5 bis 1,5 mm gebildet und von einem sich an den Siebkorb anschließenden zylindrischen Mundstück und der über das Mundstück hinausragenden, zylindrischen Schneckenwelle als hohlzylindrischer Körper transportiert und ausgetragen. Der vom letzten Schneckengang bis zum Ende des Siebkorbes vorliegende hohlzylindrische Raum für den Feststoffpfropfen hat dabei eine Länge von mindestens einem Innendurchmesser des Siebzylinders. Bei trockensubstanzarmen Suspensionen kann zur Verbesserung der Bildung des Filterkuchens entwässerter Feststoff zurückgeführt werden.

Die durch den Preßdruck in dem elastischen Pfropfen entstehenden Kräfte verdichten denselben zwischen den Wänden des zylindrischen Siebkorbes, dem Mundstück und der verlängerten Schneckenseele so stark, daß das Abwasser nicht durch den Feststoffpfropfen dringen oder diesen gar herausdrücken kann. Die verlängerte zylindrische Schneckenseele mit einem 1- bis 2-fachen Durchmesser der Stärke des Ringspaltes zwischen Siebkorb und Schneckenseele füllt die Pfropfenmitte aus und verhindert damit das Eindringen der Flüssigkeit in den sonst unter geringeren Preßspannungen stehenden achsialen Bereich des Preßpfropfens.

Um ein Ausdrücken des Wassers zum Austrag hin und damit eine Zerstörung des Pfropfens zu vermeiden, ist die Vorrichtung so gestaltet, daß der hohlzylindrische Feststoffpfropfen 70-95% seiner Länge vom Siebzylinder umschlossen wird. Das hier abgepreßte Wasser kann so durch die Schlitze des Siebkorbes entweichen und gefährdet nicht die Standfestigkeit des Feststoffpfropfens. Im Bereich des Austrittes des Feststoffes aus der Maschine nimmt der Preßdruck im Pfropfen wieder ab, so daß die Entwässerung aufhört. Das vorgesehene zylindrische Mundstück ist daher so gestaltet, daß es in einer Länge von 5-30% des Pfropfens denselben umschließt. Mit der Veränderbarkeit der Länge dieses Mundstückes ist gleichzeitig die Einstellung der Verspannung des Pfropfens und damit des Trockensubstanzgehaltes im abgeschiedenen Feststoff möglich.

Die zur Bildung des Feststoffpfropfens eingesetzte Schnecke besitzt im Bereich des Zulaufes bis zum Beginn des Pfropfens eine gleichbleibende Steigung aus rechtwinklig zur Achse stehenden Wendeln. Damit werden Verklemmungen und Stauungen des abgeschiedenen Feststoffes im Bereich der Schneckenwindungen vermieden.

Die Standfestigkeit des Pfropfens ist neben seinen inneren Spannungen weitgehend von der Homogenität desselben abhängig. Um bei der Bildung des Pfropfens einen Mischeffekt zu erreichen, wurde die letzte der Schneckenwendeln vor dem Feststoffpfropfen etwa 180-360° zur Schnekkenseele hin auslaufend aufgeführt. Dadurch wird zusätzlich eine verstärkte Verdichtung im Bereich der Schneckenseele erreicht. Dieser Bereich ist durch die dort sonst geringere Spannung im Pfropfen von einer Durchfeuchtung gefährdet.

Gleichzeitig wird mit der auslaufenden Ausführung der Schnecke eine gleichmäßige Verteilung der achsialen und radialen Kräfte erreicht. Damit kann die über das Mundstück hinaus geführte Schneckenseele und der Feststoffpfropfen die Funktion des austragsseitigen Lagers übernehmen.

Da bei Beginn der Arbeit des Preßseparators noch kein Pfropfen in der Maschine vorhanden ist, wird vor dem Einschalten der Motoren der Abwasserpumpe und des Separators von der Austragsseite her ein Hilfspfropfen, beispielsweise aus Schaumstoff (Styropor) eingeschoben und so verklemmt, daß er erst unter dem Druck des sich nach vorn schiebenden Feststoffes aus dem Preßseparator herausgeschoben wird.

Auf der Seite der Befüllung des Separators wird die Schnecke 2 bis 3 Windungen in einem Rohrstück geführt. Damit wird erreicht, daß die vorhandene Siebfläche durch bereits aufkonzentrierte, aber noch zirkulierende Suspension voll belastet wird.

Das Abwasser wird dem Preßschneckenseparator im Normalfall mit einer Kreiselpumpe zugeführt, und zwar vorteilhaft im Überschuß. Zur Rückleitung des Überschusses wird unmittelbar neben dem Zuführungs- ein Rücklaufstutzen angeordnet. Die zwischen dem Einlauf und dem Siebkorb im Zulaufraum angeordneten Schneckenwindungen begrenzen das Gebiet des Überströmens und verhindern damit ein Abschwemmen von eingedickt im Wandbereich angereicherten, dem Siebkorb zuzuführenden Feststoffteilchen über den Überlauf des Separators. Die Zuführungsregulierung erfolgt damit selbständig durch den Preßschneckenseparator.

Zur einfachen und robusten Gestaltung der Maschine wurde die Schnekkenseele mit einer Steckkupplung auf die Lagerung des Antriebes aufgesteckt. Weiterhin wird die Halterung des Siebkorbes innerhalb des Preßschneckenseparators durch Haltestäbe, die achsparallel verlaufend auf der Außenseite des Siebkorbes angeordnet sind im Zusammenwirken mit Haltenasen an der Innenseite des Trennkammermantels bewirkt; damit kann der Siebkorb ohne eine zusätzliche Befestigung in in dem Gehäuses vorgesehene Halterungen eingeschoben werden. Zur Aufnahme der Torsionskräfte ist dazu mindestens ein Haltestab anzuordnen, vorteilhaft werden drei Haltestäbe im Winkelabstabd von 120° voneinander vorgesehen.

Auf der Ausstoßseite des Siebkorbes werden die Enden der Siebstäbe in eine Ringnut des Mundstückflansches eingeführt. Damit erfolgt eine Abstützung der Siebstäbe und eine Zentrierung zwischen Mundstück und Siebkorb.

Für die manuelle Einstellung der auf den Trockensubstanzgehalt des Feststoffes wirkenden Länge des Mundstückes wird über das feststehende Mundstück eine achsial verschieb- und verklemmbare dünnwandige zylindrische Ansatzverlängerung geschoben, die aus einer Anzahl von Ringen unterschiedlicher Länge ausgewählt wird. Wird eine gegen- über dem Rohr des Mundstückes teleskopartig verschiebbare Ansatzverlängerung vorgesehen, kann eine stufenlose Einstellung vorgenommen werden; wird darüberhinaus diese Ansatzverlängerung mit einem Antrieb versehen, ist damit eine automatische Reglung möglich.

Ein Ausgleich der schwankenden Arbeitsweise des Schneckenpreßseparators durch Unterschiede in der Konsistenz des Abwassers wird auch dadurch erreicht, daß zur Regulierung der Geschwindigkeit des Pfropfenaustrittes im unteren Bereich des zylindrischen Mundstückes am Austritt des Feststoffes ein außerhalb der Mündung angeordneter Ausstoßregler vorgesehen ist, der die Ausstoßfläche zwischen 0% einerseits und etwa 10% bis 25% anderseits abzudecken in der Lage ist. Dazu wird zweckmäßigerweise ein Hebel mit die Ausstoßmündung teilweise abdeckenden Flächen angeordnet, auf den eine Rückstellkraft wirkt. Diese Rückstellkraft wird vorteilhaft durch eine Gewichtsbelastung erzeugt, wobei diese Kraft durch Veränderung des Gewichtes und/oder durch Veränderung des Hebelarmes einstellbar gemacht werden kann. Bei austretendem Feststoff wird der Ausstoßregler ausgelenkt und gibt den von ihm abgedeckten Teil der Ausstoßfläche nach und nach frei, bis bei fester werdendem Feststoff die gesamte Ringfläche freigegeben ist.

Bei der möglichen automatischen Nachstellung der Länge des auf den Trockensubstanzgehalt des Feststoffes wirkenden Mundstückes erfolgt die Verschiebung des dünnwandigen Zylinders durch einen Antrieb, wobei zur Steuerung desselben die Stromaufnahme des Motors des Preßschneckenseparators herangezogen wird.

Wird der Pfropfen durch eine Störung zu weich, besteht die Gefahr des Durchbruches der Suspension auf der Feststoffaustragsseite. Dieser Vorgang wird durch das Unterschreiten eines vorgegebenen Wertes der Stromaufnahme des Motors des Preßschneckenseparators angekündigt, so daß Speisepumpe und Separator automatisch abgeschaltet werden können.

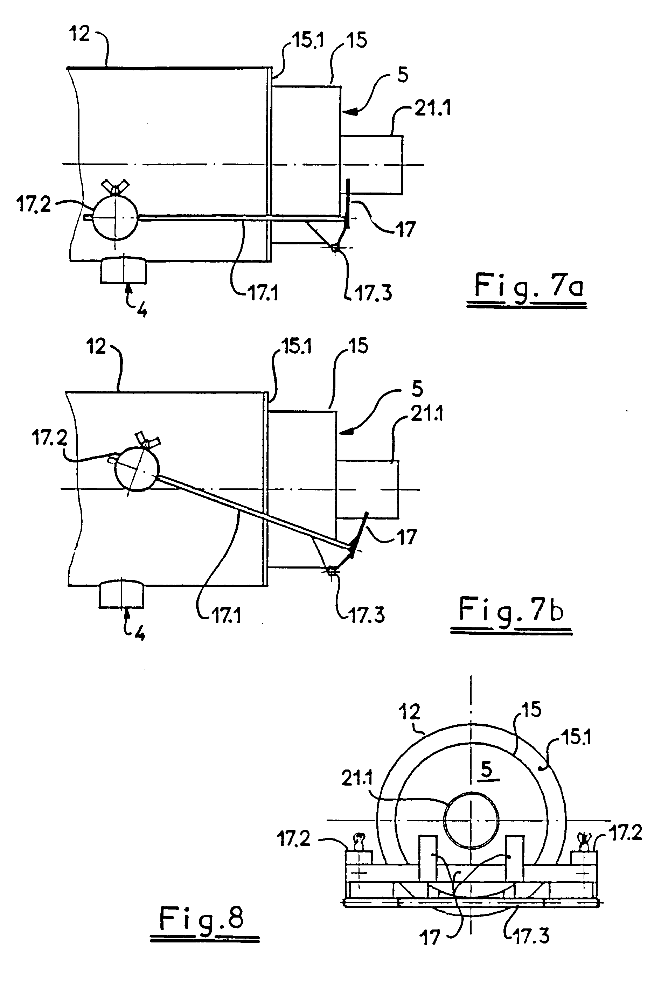

In den Figuren 1 bis 8 ist ein Ausführungsbeispiel eines erfindungsgemäßen Preßschneckenseparators dargestellt; dabei zeigen
- Fig. 1:: einen Längsschnitt des Preßschneckenseparators ohne gebildeten, transportierten und ausgestoßenen Pfropfen,
- Fig. 2:: Querschnitt des Preßschneckenseparators im Bereich der Abwasserzuführung gemäß II-II (Figur 1),
- Fig. 3:: Querschnitt des Preßschneckenseparators im Bereich des Siebkorbes gemäß III-III (Figur 1),
- Fig. 4:: Querschnitt des Preßschneckenseparators im Bereich des zylindrischen Ansatzes gemäß IV-IV (Figur 1),
- Fig. 5:: Einzelheit Torsionssicherung des Siebkorbes,
- Fig. 6:: Einzelheit Siebkorb - Endlagerung.
- Fig. 7:: Einzelheit des Ausstoßreglers, Seitansicht,
- Fig. 7a:: Ausstoßregler geschlossen,
- Fig. 7b:: Ausstoßregler teil-geöffnet;
- Fig. 8:: Einzelheit Ausstoßregeler, Vorderansicht.

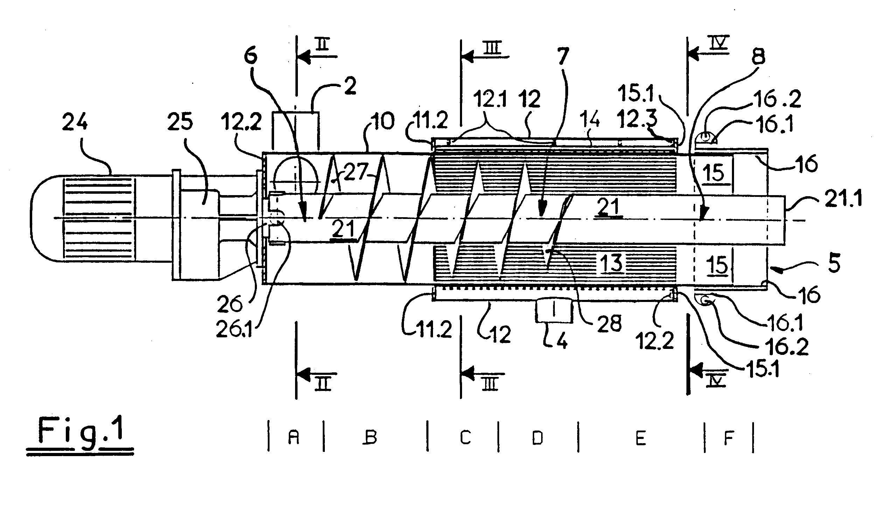

In Figur 1 sind mit A-F die verschiedenen Bereiche der Umwandlung der Suspension in eine flüssige und eine feste Phase dargestellt.Dabei stehen die einzelnen Buchstaben für folgende Bereiche:
- A:: Zu- und Überlauf der Suspension,
- B:: Bereich der Zuführungsregulierung
- C:: Zirkulierende Entwässerungszone,
- D:: Zone des sich aufbauenden Preßdruckes mit Misch- und Homogenisationseffekt,
- E:: Bereich der Entwässerung des Feststoffpfropfens,
- F:: Zone des Austrages des Feststoffes.

Der Verfahrensablauf wird an Hand der Fig. 1 für eine Gülle - Separierung wie folgt beschrieben:

Die zu trennende Flüssigkeit gelangt von der Güllepumpe über eine entsprechende, in den Gülle - Zulauf 2 mündende Rohrleitung in den ringförmigen Einlaufraum 6 des Preßschneckenseparators 1. Die im Überschuß zugeführte Gülle füllt diesen und ein überschießender Teil wird in den Gülle - Vorratsbehälter zurückgeführt. Dieser Rücklauf bewegt die Gülle im Vorratsbehälter und verhindert eine Sedimentation der in der Gülle enthaltenen Feststoffe. Von der von dem Antriebsmotor 24 über das Getriebe 25 angetriebenen Preßschnecke wird ein der Aufnahmevermögen der Preßschnecke entsprechender Anteil der Gülle erfaßt und so selbstreguliert mittels der Schneckenwendeln 27 dem Trennraum 7 zugeführt, wobei zunächst die feste Wand des Schneckenvorlaufs in dem Einlaufraum 6 ein ungestörtes Ausbilden einer wandnahen Lage des Feststoffes erlaubt, die dann beim Übergang in den Trennraum 7 als sich verstärkender Filterkuchen, und schließlich einen das gesamte Lumen des Ringraumes füllenden Pfropfen bildend, auf dem Siebkorb 13 liegt. Die Preßschnecke 20 transportiert den Feststoff - Pfropfen zum Ausstoßraum 8, wobei der Preßdruck bis hin zum Ende der Schneckenwendel 27 im Schneckenauslauf 28 zunimmt und mit dem Preßdruck die Entwässerung des in dem Pfropfen gesammelten Feststoffes. Dieser Pfropfen ist bis zu der Ausstoßmündung 5 außen von dem Siebkorb 13 und dem den Siebkorb 13 verlängernden zylindrischen Mundstück 15 und innen von der Schneckenwelle 21 und deren über die Ausstoßmündung hinaus geführten, überstehenden Wellenende 21.1 geführt. Unter der Wirkung des von der Preßschnecke erzeugten Preßdruckes wird schließlich der so erzeugte Pfropfen aus der Ausstoßmündung 5 ausgeschoben. Im praktischen Betrieb wurde ein derartiger Preßschneckenseparator zur Feststoffabtrennung aus Schweinegülle eingesetzt, der bei einem Trockensubstanzgehalt der Schweinegülle von 5,2% eine Durchsatzleistung von 4 m³/h erreichte. Dieser Preßschnekkenseparator hatte einen Siebkorb von 500 mm Länge bei einem zylindrischen Durchgang von Siebkorb und Mundstück von 260 mm. Das Sieb wies eine Spaltenweite von 0,75 mm auf, die Preßschnecke eine Schnekkensteigung von 100 mm bei 5 Gängen, einem Durchmesser der Schneckenwelle von 110 mm. Der sich bildende Propfen war insgesamt 400 mm lang, wovon sich 280 mm in dem sich an die Schneckenwendel anschliessenden Teil des Siebkorbes und 120 mm im Mundstück befanden. Die zum Betrieb des Preßschneckenseparators notwendige Antriebsleistung stellte sich bei einer Drehzahl der Schnecke von 30 U/min auf 2,2 kW ein. Unter diesen Betriebsbedingungen wurden 220 kg/h Feststoff abgetrennt mit einem Trockensubstanzgehalt von 32 %; das ablaufende Wasser mit 3,78 m³/h wies einen Rest-Feststoffgehalt von 3,7 % bezogen auf Trockensubstanz auf. Das entspricht einem auf die Feststoffe bezogenen Abscheidegrad von 32,7 %. Der zum Anfahren notwendige Styropor-Hilfspfropfen hatte den entsprechenden Lochdurchmesser von 110 mm und den Außendurchmesser von 260 mm sowie eine Länge von 300 mm. Der Überlauf lag etwa 1,5 m über dem Maschineneinlauf und führte das Vielfache der Zulaufmenge über den Abwasser - Rücklauf 3 als Überschuß in die Güllegrube ab, wobei die relativ große Menge zur Homogenisierung der 10 bis 20 m³ großen Pumpengrube ausreicht.

Zur Vereinfachung des aus der Figur 1 weiter zu erkennenden Aufbaues des Preßschneckenseparators 1 ist die Preßschnecke 20 über eine einfache Steckverbindung mit der Antriebswelle 26 des an den antriebsseitigen Flansch 11.1 des Preßschneckenseparatorgehäuses 10 angesetzten Antriebs mit Motor 24 und Getriebe 25 verbunden; dazu ist die Ausgangswelle 26, über die die als Hohlwelle ausgebildete Schnekkenwelle 21 gesteckt ist, mit Mitnehmern 26.1 versehen, die in entsprechende Ausnehmungen an dem antriebseitigen Ende der Schneckenwelle 21 vorgesehen sind. Die Schneckenwendel 27 hat ihren Anfang noch im Zulaufraum 6, in den sowohl der Abwasser - Zulauf 2 als auch der Abwasser - Rücklauf 3 (Fig. 2) münden, wobei zwei Wendelgänge vor dem mit dem Siebkorb 13 versehenen Trennraum 7 liegen. Der Siebkorb 13 selbst ist außen von einem Trennkammermantel 12 umgeben, der einen Ringraum abteilt, in dem sich das im Sieb abgetrennte Wasser zur Ableitung durch den Wasser - Auslauf 4 sammelt. Dieser Trennraummantel 12 ist mit seinem zulaufseitigen Flansch 12.2 an den Einlaufraum 6 und mit seinem Innenring 12.3 an den Flansch 15.1 des zylindrischen Mundstückes 15 verbunden. Die Schneckenwendel 27 endet bereits vor dem Ende des Siebkorbes 13, wobei das Schneckenende als Schneckenauslauf 28 ausgebildet ist. Der sich durch die Entwässerung verdichtende Feststoff wird von der Schneckenwendel zum Schneckenende hin transportiert, im Bereich der letzten Schneckenwendeln angestaut und zum Pfropfen geformt. Der sich dabei aufbauende Druck führt zur weiteren Entwässerung und zur Anlagerung des weiterhin transportierten Feststoffes an das schneckenseitige Ende des Pfropfens. Durch die mit 360° zur Schneckenseele hin auslaufend ausgeführte letzte Schneckenwendel 28 wird der Feststoff vor seiner Anlagerung an den Pfropfen durchmischt, in der Nähe der Schneckenwelle höher verdichtet und ein gleichmäßiger achsialer und radialer Druck erzeugt. Damit kann von dem Feststoffpfropfen die Zentrierung und Lagerung der Preßschnecke 20 übernommen werden. Entsprechend der ständig hinzukommenden Feststoffmenge wird der Pfropfen durch die hohlzylindrische Zone des Ausstoßraumes 8 zwischen dem Mundstück 15 und dem überstehenden Ende 21.1 der Schneckenwelle 21 gedrückt und gelangt durch das Mundstück 14 in den Bereich der Ausstoßöffnung 5, der Mündung 5 für den Feststoff. Um die Pfropfenlänge den Gegebenheiten anpassen zu können, ist auf das Rohr des zylindrischen Mundstückes 15 eine verschieb- und festlegbare Verlängerung 16 aufgesetzt, die mit dem Spannband 16.1 mittels der Verschraubungen 16.2 lösbar auf dem Rohr befestigt ist.

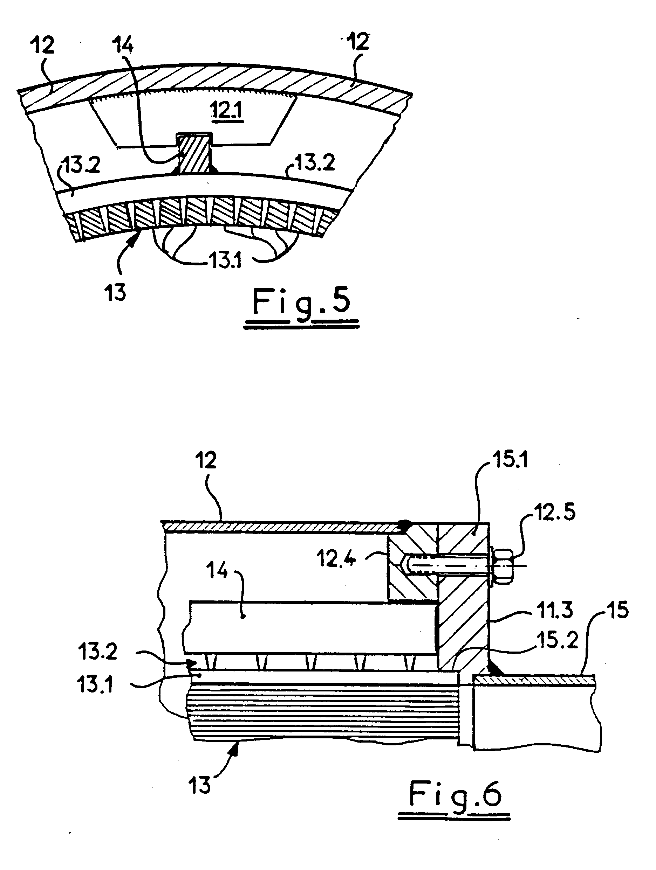

Die Figuren 2, 3 und 4 zeigen Querschnitte durch den Preßschneckenseparator gemäß den in Figur 1 eingetragenen Schnittlinien II-II, III-III und IV-IV. Die Figur 2 zeigt den Querschnitt duch den Einlaufraum 6 in Höhe der in diesen mündenden Stutzen für den Abwasser - Zulauf 2 und den Abwasser -Rücklauf 3 mit Blick auf den antriebsseitigen Endflansch 11.1. Konzentrisch in diesem Einlaufraum 6 ist die Schneckenwell 21, hier noch ohne Schneckenwendel, angeordnet. Die Figur 3 zeigt einen ensprechenden Schnitt durch den Trennraum 7. Dieser ist der mit dem Siebkorb 13 versehene Teil des Preßschneckenseparators, wobei der Siebkorb von achsparallelen Siebstäben 13.1 (Fig. 5) gebildet ist. Die Siebstäbe werden von Stützringen 13.2 gehalten, die als Ringe oder aber auch als Wendel aufgebracht sein können. Auf der Außenseite dieser Stützringe 13.2 sind achsparallele Haltestäbe 14 vorgesehen, die in Ausnehmungen in auf der Innenseite des Trennkammermantels 12 entsprechend angeordneten Haltenasen 12.1 eingreifend, Torsionsmomente aufnehmen und in das Gehäuse einleiten können. In dem dargestellten Preßschneckenseparator ist der Siebkorb 13 mit 3 achsparallelen, um 120° versetzt angeordneten Haltestäben 14 versehen, die in die Ausnehmungen der Haltenasen 12.1 eingeschoben sind. Zur Abstützung der Siebstäbe 13.1 sind deren Enden auf der Preßseite in eine Ringnut des Mundstückflansches 15.1 des Mundstückes 15 zentrisch gehalten, gleichzeitig zur Zentrierung des Siebkorbes 13 gegenüber dem Mundstück 15. Im Inneren des Siebkorbes 13 befindet sich die hier mit der Schneckenwendel 27 versehene Schneckenwelle 21. Die Figur 4 zeigt den Schnitt durch den Ausstoßraum 8 mit Blick auf den Mundstückflansch 15. Die Verschraubungen 12.4 zeigen die Befestigung des Mundstückflansches 15 an dem Innenring 12.3 (Fig. 6). Das Mundstück 15 liegt konzentrisch zum Trennkammermantel 12. Im Lumen des Mundstückes 15 liegt die Schneckenwelle mit ihrem überstehenden Wellenende 21.1, in der Tiefe ist der Wendelauslauf 28 der Schneckenwendel 27 zu erkennen.

Die Figuren 5 und 6 zeigen Einzelheiten der Befestigung des Siebkorbes 13 im Bereich des Trennraumes. Der aus den achsparallelen Siebstäben 13.1 gebildete Siebkorb 13 ist von Stützringen 13.2 umgeben, auf deren Außenseiten mindestens ein Haltestab 14 befestigt ist. Korrespondierend dazu sind auf der Innenseite des Trennkammermantels 12 Haltenasen 12.1 vorgesehen, die mit Ausnehmungen zur etwa formschlüssigen Aufnahme der Haltestäbe versehen sind. Diese Ausnehmungen fluchten für jeden Haltestab notwendigerweise. Die Siebstäbe 13.1 werden mit ihren ausstoßseitigen Enden von einer ringförmigen Ausnehmung 15.2 in dem Mundstückflansch 15.1 des aufzusetzenden Mundstückes 15 aufgenommen und zwangsweise gegenüber dem Mundstück zentriert. Der Mundstückflansch 15.1 ist dabei an einen fest mit dem Trennkammermantel 12 verbundenen Innenring 12.4 angeflanscht, wobei die Verschraubungen 12.5 eine lösbare Verbindung herstellen. Der Innenring 12.4 ist gegenüber dem Mundstückflansch 15.1 derart abgesetzt, daß die Haltestäbe 14 ebenfalls zentiert aufgenommen werden.

Für den Ausgleich der schwankenden Arbeitsweise des Schneckenpreßseparators durch Unterschiede in dem Feststoffgehalt des Abwassers ist im unteren Bereich der Ausstoßöffnung 5 dieser nachgeschaltet, an dem zylindrischen Mundstück als Ausstoßregler 17 ein Flacheisen mit zwei Fahnen an einem Drehelement 17.3 befestigt und mit einem Hebelarm 17.1 verbunden. Damit kann über den Hebelarm 17.1 die mit einem verschiebbaren Gewicht 17.1 einstellbare Belastung auf das Flacheisen und die Fahnen und damit auf den Ausstoßregler übertragen werden.

## Patentansprüche

1. Verfahren zum Abtrennen von Abwasser und Feststoffen für Feststoffe enthaltende Abwässer, bei dem das Abwasser in einen Preßschnekkenseparator eingeführt, der darin enthaltene Feststoff durch eine von einem Antriebsmotor angetriebene, bis in einen Siebkorb reichende Schnecke zu einem Pfropfen geformt und als Pfropfen entwässert aus der Mündung des Preßschneckenseparators ausgedrückt wird, während das von dem Feststoff befreite Wasser aus dem Gehäuse des Preßschnekkenseparators austritt,
dadurch gekennzeichnet,
daß der durch die Preßkraft der Preßschnecke sich verdichtende Feststoff durch einen hohlzylindrischen, zwischen Schneckenwelle und Siebkorb bestehenden Ringspalt aus der Mündung ausgepreßt wird.

2. Verfahren nach Anspruch 1,
dadurch gekennzeichnet,
daß die Zufuhr des Abwassers aus einem Abwasserbehälter über eine Förderpumpe im Überschuß erfolgt und der Überschuß als Rücklauf in den Vorratsbehälter für das zu reinigende Abwasser, dieses durchrührend zurückgeführt wird.

3. Verfahren nach Anspruch 1 oder 2,
dadurch gekennzeichnet,
daß der Druck im Preßschneckenseparator über eine Druckausgleichsleitung in den Abwasserbehälter auf dem Druckniveau der umgebenden Atmosphäre gehalten wird.

4. Verfahren nach einem der Ansprüche 1 bis 3,
dadurch gekennzeichnet,
daß zur Verbesserung der Pfropfenbildung vorzugsweise bei feststoffarmen Abwässern entwässerter Feststoff zum Eingang des Separators zurückgefördert und dem Zulauf beigemischt wird.

5. Verfahren nach einem der Ansprüche 1 bis 4,
dadurch gekennzeichnet,
daß die Leistungsaufnahme des Antriebsmotors überwacht wird und bei durch zu geringer Entwässerung des Pfropfens und damit bei einer Gefahr eines Durchbruchs des feststoffhaltigen Wassers gegebenen Unterschreiten einer Mindest-Antriebsleistung der Antriebsmotor der Preßschnecke abgeschaltet wird.

6. Presschneckenseparator zur Durchführung des Verfahrens nach einem der Ansprüche 1 bis 5, mit einem eine Zuführung (2) für das Abwasser, eine Abführung für das abgetrennte Wasser und eine Mündung für den entwässerten Feststoff aufweisenden Gehäuse (10) mit einer darin angeordneten, von einem Antriebsmotor (24) angetriebenen Presschnecke (20) und einem diese umgebenden, zylindrisch ausgebildeten, gegen das Gehäuse (10) abgestützten Siebkorb (13), wobei die Presschnecke (20) eine Schneckenwelle (21) umfasst, die von einer Schneckenwendel (27) umgeben ist, **deren Rand bis nahe an die Innenseite des Siebkorbes geführt ist,** dadurch gekennzeichnet, dass das Ende der Schneckenwelle (21) über das Mundstück (15) vorsteht und **die Schneckenwelle einen 1-bis 2-fachen Durchmesser der Stärke des Ringspaltes zwischen Schneckenwelle und Siebkorb (3) hat.**

7. Preßschneckenseparator nach Anspruch 6,
dadurch gekennzeichnet,
daß das Separatorgehäuse (10) ein zylindrisches Mundstück (15) aufweist, dessen innerer Durchmesser gleich dem Innendurchmesser des Siebkorbes (13) ist und daß der hohlzylindrische Feststoffpfropfen zu etwa 70 % bis 95 % von dem wendelfreien Teil des Siebkorbes (13) und zu etwa 30 % bis 5 % von dem zylindrischen Mundstück umschlossen ist.

8. Preßschneckenseparator nach Anspruch 6 oder 7,
dadurch gekennzeichnet,
daß die in dem Siebkorb (13) endende Schneckenwendel (27) im Bereich ihres letzten Ganges (28) mindestens von 180° vom Ende der Schneckenwendel (27) an gerechnet zur Schneckenwelle (21) hin auslaufend ausgebildet ist.

9. Preßschneckenseparator nach einem der Ansprüche 6 bis 8, **dadurch gekennzeichnet,** daß die Schneckenwelle (21) der Preßschnecke (20) mittels einer am antriebseitigen Ende vorgesehenen Steckkupplung (23) mit der Abtriebswelle (26) des Antriebsmotors (24) bzw. des Getriebes (25) verbunden ist.

10. Preßschneckenseparator nach einem der Ansprüche 6 bis 9, **dadurch gekennzeichnet**, daß der Siebkorb (13) als Spaltsieb ausgebildet ist, dessen Siebstäbe (13.1) achsparallel verlaufen, wobei die Weite der Spalte des Spaltsiebes vorzugsweise 0,5 mm bis 1,5 mm beträgt.

11. Preßschneckenseparator nach einem der Ansprüche 6 bis 10, **dadurch gekennzeichnet**, daß der Siebkorb (13) mit mindestens einem, vorzugsweise drei auf der Außenseite des Siebkorbes (13) vorgesehenen, die auftretenden Torsionskräfte aufnehmenden Haltestab/-stäben (14) versehen ist, und daß auf der Innenseite des die Trennkammer (7) umgebende Trennkammermantels mit dem/den Haltestab/-stäben (14) zusammenwirkende, mit fluchtenden Ausnehmungen versehene Haltenasen (12.1) vorgesehen sind.

12. Preßschneckenseparator nach Anspruch 11, **dadurch gekennzeichnet**, daß das zylindrische Mundstück (15) mittels eines Mundstückflansches (11.3) an einem die Trennkammer (7) abschliessenden Innenringes (12.2) lösbar befestigt ist, wobei der Innenring (12.2) dem/den Haltestab/-stäben (14) entsprechende, mit den Ausnehmungen der Haltenasen (12.1) fluchtende Ausnehmungen aufweist, wobei vorzugsweise das/die freie /-Ende/-n des/ der Haltestab/-stäbe (14) eingreift/eingreifen.

13. Preßschneckenseparator nach einem der Ansprüche 6 bis 12 ,**dadurch gekennzeichnet**, daß das aus dem Gehäuse (10) geführte zylindrische Mundstück (15) an seinem überstehenden Ende mit einer überschieb- und festsetzbaren, die Pfropfenlänge einzustellen erlaubenden Ansatzverlängerung (16) versehen ist, vorzugsweise ausgestattet mit einem Stellantrieb zur automatischen Verstellung und damit zur Regelung der Pfropfenlänge.

14. Preßschneckenseparator nach einem der Ansprüche 6 bis 12, **dadurch gekennzeichnet**, daß außerhalb der Mündung (5) des zylindrischen Mundstückes (15) bzw. der Ansatzverlängerung (16) ein schwenkbarer Ausstoßregler (17) vorgesehen ist, derart, daß die Fläche der Mündung (5) für den entwässerten Feststoff teilweise abdeckbar ist, wobei die maximal überdeckte Teilfläche der Mündung bei 10% bis 25% ihrer Gesamtfläche liegt, und wobei der Ausstoßregler vorzugsweise mit einem um eine Schwenkachse (17.3) schwenkbaren Hebel (17.1) mit Mittel zur Erzeugung einer einstellbaren Gegenkraft, vorzugweise in Form von einem verstellbaren Gegengewicht (17.2) versehen ist.

## Claims

1. Method for separating waste water and solid matters for waste waters containing solid matters, wherein the waste water is fed into a screw press separator, the solid matter contained therein is formed into a plug by virtue of a worm which is driven by a driving motor and which worm extends into a perforated basket and the solid matter is pushed in the form of a dewatered plug out of the mouth of the screw press separator, whilst the water which has been extracted from the solid matter exits from the housing of the screw press separator, characterised in that the solid matter which is compacting by virtue of the pressing force of the screw press, is pressed out of the mouth through a hollow cylindrical annular gap between the worm shaft and the perforated basket.

2. Method according to claim 1 characterised in that the waste water is fed in excess from the waste water container by way of a delivery pump and the excess is returned as a run back into the storage container for the waste water to be purified and this waste water is agitated.

3. Method according to claim 1 or 2, characterised in that the pressure in the screw press separator is held at the pressure level of the ambient atmosphere by way of a pressure compensating line in the waste water container.

4. Method according to one of claims 1 to 3, characterised in that for the purpose of improving the formation of the plug, preferably in the case of waste waters with low solid matter contents, dewatered solid matter is returned to the input of the separator and added to the inlet.

5. Method according to one of claims 1 to 4, characterised in that the power drawn in by the driving motor is controlled and when the plug is not sufficiently dewatered and consequently when not achieving a minimum required power which presents the danger of the water containing the solid matter breaking through, the driving motor of the screw press is switched off.

6. A screw press separator for the purpose of carrying out the method in accordance with one of claims 1 to 5, having a housing (10) which comprises an inlet pipe (2) for the waste water, an outlet pipe for the separated water and a mouth for the dewatered solid matter, furthermore having a screw press (20) which is disposed in the housing (10) and which is driven by a driving motor (24) and furthermore a perforated basket (13) which is formed in a cylindrical manner encompassing the screw press (20) and is supported against the housing (10), wherein the screw press (20) encompasses a worm shaft (21), which is encompassed by a worm spiral (27) whose edge is guided as far as closely up to the inner side of the perforated basket, characterised in that the end of the worm shaft (21) protrudes beyond the mouth piece (15) and the diameter of the worm shaft is one-times to two-times the width of the annular gap of the worm shaft and the perforated basket (3).

7. A screw press separator according to claim 6, characterised in that the separator housing (10) comprises a cylindrical mouth piece (15) whose inner diameter is identical to the inner diameter of the perforated basket (13) and that the hollow cylindrical solid matter plug is enclosed up to approximately 70% to 95% by the spiral-free portion of the perforated basket (13) and up to 30% to 5% by the cylindrical mouth piece.

8. A screw press separator according to claims 6 or 7, characterised in that the worm spiral (27) which ends in the perforated basket (13) is formed in the region of its last thread (28) at least by 180° from the end of the worm spiral (27) onwards extending to the worm shaft (21).

9. A screw press separator according to one of claims 6 to 8, characterised in that the worm shaft (21) of the screw press (20) is connected to the driven shaft (26) of the driving motor (24) or of the gear (25) by means of a plug-in coupling (23) provided on the end at the driving side.

10. A screw press separator according to one of claims 6 to 9, characterised in that the perforated basket (13) is formed as a slotted hole screen whose sieve bars (13.1) extend axis parallel, wherein the width of the gap of the slotted hole screen amounts preferably to 0.5mm to 1.5mm.

11. A screw press separator according to one of claims 6 to 10, characterised in that the perforated basket (13) is provided with at least one, preferably three, holding rods/small rods (14) which are provided on the outer side of the perforated basket (13) and which holding rods/small rods absorb any torsional forces which occur and that holding projections (12.1) are provided on the inner side of the separating chamber periphery encompassing the separating chamber (7), these holding projections (12.1) are provided with aligned recesses and interact with the holding rods/small rods (14).

12. A screw press separator according to claim 11, characterised in that the cylindrical mouth piece (15) is releasably attached by means of a mouth piece flange (11.3) on an inner ring (12.2) which surrounds the separating chamber (7), wherein the inner ring (12.2) comprises recesses which correspond to the holding rods/small rods (14) and are aligned with the recesses of the holding projections (12.1) and preferably the free end(s) of the holding rod/rods (14) engage therein.

13. A screw press separator according to one of claims 6 to 12, characterised in that the cylindrical mouth piece (15) guided out of the housing (10) is provided at its protruding end with an extension piece (16) which can be pushed on and fixed and which allows the length of the plug to be adjusted, preferably equipped with an actuator for carrying out automatic adjustments and consequently for regulating the length of the plug.

14. A screw press separator according to one of claims 6 to 12, characterised in that a pivotable ejection controller (17) is provided outside the mouth (5) of the cylindrical mouth piece (15) or of the extension piece (16), in such a way that the area of the mouth (5) for the dewatered solid matter is partially covered, wherein the maximum covered partial area of the mouth amounts to 10% to 25% of its entire area, and wherein the ejection regulator preferably having a lever (17.1) which pivots about a pivot axis (17.3) is provided with the means of producing an adjustable counterforce, preferably in the form of an adjustable counterweight (17.2).

## Revendications

1. Procédé pour séparer les eaux résiduaires et les matières solides pour eaux résiduaires contenant des matières solides dans lequel les eaux résiduaires sont introduites dans un séparateur à vis de pression, les matières solides sont transformées en bouchon par une vis pénétrant dans un panier de tamisage et entraînée par un moteur d'entraînement et ledit bouchon étant expulsé à l'état déshydraté de l'orifice du séparateur à vis de pression tandis que l'eau débarrassée des matières solides s'écoule du corps du séparateur à vis de pression, caractérisé en ce que les matières solides compactées par la force de compression de la vis de pression sont pressées hors de l'orifice à travers l'intervalle annulaire en forme de cylindre creux existant entre l'arbre de la vis et le panier de tamisage.

2. Procédé selon la revendication 1, caractérisé en ce que l'adduction des eaux résiduaires provenant d'un réservoir à eaux résiduaires est réalisée en excès au moyen d'une pompe de transport et que l'excès est recyclé sous forme d'un courant de retour qui vient agiter le réservoir d'alimentation des eaux résiduaires à purifier.

3. Procédé selon la revendication 1 ou 2, caractérisé en ce que la pression dans le séparateur à vis de pression est maintenue par une conduite d'égalisation de pression dans le réservoir à eaux résiduaires au niveau de pression de l'atmosphère environnante.

4. Procédé selon l'une des revendications 1 à 3, caractérisé en ce que, pour améliorer la formation du bouchon et, de préférence, dans le cas des eaux résiduaires à faible teneur en matières solides, les matières solides déshydratées sont recyclées à l'entrée du séparateur et sont mélangées au courant d'alimentation.

5. Procédé selon l'une des revendications 1 à 4, caractérisé en ce que la puissance absorbée par le moteur d'entraînement est surveillée et que, en cas de déshydratation trop faible du bouchon avec, par conséquent, un risque de percée de l'eau contenant des matières solides, le moteur d'entraînement de la vis de pression est déclenché lorsque la puissance d'entraînement descend en dessous d'une valeur minimale déterminée.

6. Séparateur à vis de pression pour mettre en oeuvre le procédé selon l'une des revendications 1 à 5, avec un corps (10) comportant une alimentation (2) pour les eaux résiduaires, une évacuation pour l'eau séparée et un orifice pour les matières solides déshydratées, avec une vis de pression (20) disposée dans ce corps et entraînée par un moteur d'entraînement (24) et un panier de tamisage (13) de forme cylindrique entourant celle-ci et prenant appui sur le corps (10), dans lequel la vis de pression (20) comprend un arbre de vis (21) qui est entouré par une hélice de vis (27) dont le bord est guidé jusqu'à proximité de la face intérieure du panier de tamisage, caractérisé en ce que l'extrémité de l'arbre de vis (21) fait saillie par-dessus la pièce d'orifice (15) et que l'arbre de vis a un diamètre compris entre une et deux fois la largeur de l'intervalle annulaire existant entre l'arbre de vis et le panier de tamisage (3).

7. Séparateur à vis de pression selon la revendication 6, caractérisé en ce que le corps de séparateur (10) comporte une pièce d'orifice cylindrique (15) dont le diamètre intérieur est égal au diamètre intérieur du panier de tamisage (13) et en ce que le bouchon de matières solides en forme de cylindre creux est entouré, jusqu'à environ 70% à 95%, par la partie du panier de tamisage (13) exempte d'hélice et jusqu'à environ 30% à 5% par la pièce d'orifice cylindrique.

8. Séparateur à vis de pression selon la revendication 6 ou 7, caractérisé en ce que l'hélice de vis (27) se terminant dans le panier de tamisage (13) a une forme, dans la région de sa dernière spire (28), orientée vers l'arbre de vis (21) suivant au moins 180° calculés depuis l'extrémité de l'hélice de vis (27).

9. Séparateur à vis de pression selon l'une des revendications 6 à 8, caractérisé en ce que l'arbre de vis (21) de la vis de pression (20) est accouplé au moyen d'un accouplement à encastrement (23) prévu à l'extrémité du côté de l'entraînement à l'arbre d'entraînement (26) du moteur d'entraînement (24) ou de la transmission (25).

10. Séparateur à vis de pression selon l'une des revendications 6 à 9, caractérisé en ce que le panier de tamisage (13) se présente sous forme d'un panier à fentes dont les barreaux de tamisage (13.1) sont disposés avec des axes parallèles tandis que la largeur des lentes du panier à lentes est comprise, de préférence, entre 0,5 mm et 1,5 mm.

11. Séparateur à vis de pression selon l'une des revendications 6 à 10, caractérisé en ce que le panier de tamisage (13) est pourvu d'au moins un et, de préférence, de trois barreaux de retenue prévus sur le côté extérieur du panier de tamisage (13) qui reçoivent les forces de torsion existantes et en ce que, sur le côté intérieur de l'enveloppe entourant la chambre de séparation (7), sont prévus des ergots de retenue (12.1) coopérant avec le ou les barreaux de retenue (14) et pourvus de cavités à niveau.

12. Séparateur à vis de pression selon la revendication 11, caractérisé en ce que la pièce d'orifice cylindrique (15) est fixée de manière amovible au moyen d'un flasque de pièce d'orifice (11.3) à une bague intérieur (12.2) fermant la chambre de séparation (7), dans lequel la bague intérieure (12.2) présente des cavités à niveau correspondant aux barreaux de retenue (14) et à niveau avec les cavités des ergots de retenue (12.1), dans lequel la ou les extrémités libres du ou des barreaux de retenue (14) viennent s'engager de préférence.

13. Séparateur à vis de pression selon l'une des revendications 6 à 12, caractérisé en ce que la pièce d'orifice cylindrique (15) guidée hors du corps (10) est pourvue d'un prolongement rapporté (16) permettant de régler la longueur du bouchon et pouvant être glissé et fixé sur l'extrémité en saillie de cette pièce d'orifice et qui est pourvu, de préférence, d'une transmission de réglage pour le réglage automatique et donc l'ajustage de la longueur du bouchon.

14. Séparateur à vis de pression selon l'une des revendications 6 à 12, caractérisé en ce qu'il est prévu, en dehors de l'orifice (5) de la pièce d'orifice cylindrique (15) ou du prolongement rapporté (16), un régulateur d'extraction pivotant (17), de façon que la face de l'orifice (5) puisse être recouverte partiellement par les matières solides déshydratées, tandis que la surface partielle de l'orifice recouverte est comprise, au maximum, entre 10% à 25% de sa surface totale et que le régulateur d'extraction est pourvu, de préférence, d'un levier (17.1) pouvant pivoter autour d'un axe de pivotement (17.3) avec un moyen pour produire une force opposée réglable, de préférence sous la forme d'un contrepoids réglable (17.2).
